# EUROPÄISCHE PATENTSCHRIFT

(11) **EP 1 442 275 B1**
(45) Veröffentlichungstag und Bekanntmachung des Hinweises auf die Patenterteilung: **07.01.2009**
(21) Anmeldenummer: 02801315.9
(22) Anmeldetag: 04.10.2002
(51) Int. Cl.: G01F 1/698, G01P 5/12

(54) **LUFTGESCHWINDIGKEITS-SENSOR UND VERFAHREN ZUM BETRIEB EINES LUFTGESCHWINDIGKEITS-SENSORS**
AIRSPEED SENSOR AND METHOD FOR OPERATING AN AIRSPEED SENSOR
DETECTEUR DE LA VITESSE DE L'AIR ET SON MODE DE FONCTIONNEMENT

(30) Priorität: 10.10.2001 DE 10149867
(43) Veröffentlichungstag der Anmeldung: 04.08.2004
(73) Patentinhaber: E+E Elektronik Ges.m.b.H., 4210 Engerwitzdorf (AT)
(72) Erfinder: NIKOLAUS, Gerhard, A-4209 Engerwitzdorf (AT)
(74) Vertreter: Hofmann, Ernst
(86) Internationale Anmeldenummer: PCT/EP2002/011183
(87) Internationale Veröffentlichungsnummer: WO 2003/034002

(56) Entgegenhaltungen:
- DE-A- 19 939 942
- GB-A- 2 294 767
- FOSS J F ET AL: "THE PULSE WIDTH MODULATED-CONSTANT TEMPERATURE ANEMOMETER" MEASUREMENT SCIENCE AND TECHNOLOGY, IOP PUBLISHING, BRISTOL, GB, Bd. 7, Nr. 10, 1. Oktober 1996 (1996-10-01), Seiten 1388-1395, XP000632224 ISSN: 0957-0233

## Beschreibung

Die vorliegende Erfindung betrifft einen Luftgeschwindigkeits-Sensor sowie ein Verfahren zum Betrieb eines Luftgeschwindigkeits-Sensors.

Zur Messung von Luft-Strömungsgeschwindigkeiten sind Luftgeschwindigkeits-Sensoren auf Basis des sog. Konstanttemperatur- oder Übertemperatur-Verfahrens bekannt; üblicherweise werden diese als Heißfilmanemometer bezeichnet. Von der Anmelderin werden solche Luftgeschwindigkeits-Sensoren etwa unter den Typenbezeichnungen EE60, EE61, EE62, EE65 oder EE70 vertrieben. Derartige Luftgeschwindigkeits-Sensoren umfassen u.a. zwei separate Sensoren, die im strömenden Medium - beispielsweise Luft - angeordnet sind, dessen Strömungsgeschwindigkeit bestimmt werden soll. Ein erster Sensor - der Temperatursensor - dient hierbei zur Bestimmung der Temperatur des Strömungsmediums und folgt dessen Temperatur möglichst genau. Der zweite Sensor - der Heizsensor - stellt prinzipiell ebenfalls einen Temperatursensor dar und wird durch Zuführen elektrischer Leistung auf eine konstante Temperaturdifferenz zum ersten Sensor geregelt. Die hierzu erforderliche elektrische Heizleistung stellt dann das unmittelbare Maß für den Massenstrom, respektive die zu ermittelnde Strömungsgeschwindigkeit, dar.

Derart aufgebaute Luftgeschwindigkeits-Sensoren erfordern eine relativ hohe Heizleistung. Soll daher ein solcher Luftgeschwindigkeits-Sensor mit einer Batterie betrieben werden, so ergeben sich nur sehr kurze mögliche Betriebszeiten. Im Fall von zwei eingesetzten Batterien mit je 1,5V Betriebsspannung und einer Kapazität von ca. 2600 mAh resultiert typischerweise lediglich eine mögliche Betriebszeit zwischen 10 und 20 Stunden.

Ein möglichst stromsparender Betrieb ist beispielsweise möglich, wenn ein derartiger Luftgeschwindigkeits-Sensor zyklisch aufgeheizt wird und sich in der jeweiligen Luftströmung immer wieder abkühlt. Aus der erforderlichen Aufheizzeit kann dann auf die aktuelle Luftgeschwindigkeit geschlossen werden. In Bezug auf derartige Varianten der Luftgeschwindigkeits-Messung sei z.B. auf die US 4,501,145, die DE 36 37 497 A1 oder die DE 199 39 942 A1 verwiesen.

Aufgabe der vorliegenden Erfindung ist es, einen nochmals verbesserten Luftgeschwindigkeits-Sensor sowie ein verbessertes Verfahren zum stromsparenden Betrieb eines Luftgeschwindigkeits-Sensors anzugeben.

Diese Aufgabe wird gelöst durch einen Luftgeschwindigkeits-Sensor mit den kennzeichnenden Merkmalen des Anspruches 1.

Vorteilhafte Ausführungsformen des erfindungsgemäßen Luftgeschwindigkeits-Sensors ergeben sich aus den Merkmalen, die in den von Anspruch 1 abhängigen Ansprüchen aufgeführt sind.

Ferner wird die angegebene Aufgabe durch ein Verfahren zum Betrieb eines Luftgeschwindigkeits-Sensors mit den kennzeichnenden Merkmalen des Anspruches 10 gelöst.
Vorteilhafte Ausführungsformen des erfindungsgemäßen Verfahrens ergeben sich aus den Maßnahmen, die in den von Anspruch 10 abhängigen Ansprüchen aufgeführt sind.

Es ist nunmehr vorgesehen, lediglich einen einziges Sensorelement in Form eines Temperatursensors im erfindungsgemäßen Luftgeschwindigkeits-Sensor zu verwenden, der zyklisch bzw. periodisch mit einer bestimmten Heizleistung beaufschlagt wird und demzufolge die meiste Zeit des eigentlichen Messbetriebes unbeheizt ist. Zur Bestimmung der Luftgeschwindigkeit wird die Aufheizzeit gemessen, die der Temperatursensor benötigt, um sich um eine bestimmte Temperaturdifferenz zu erwärmen. Die ermittelte Aufheizzeit stellt das Maß für die jeweilige Strömungsgeschwindigkeit dar. Der hierbei ausgewertete Zusammenhang zwischen Aufheizzeit und und Strömungsgeschwindigkeit wird in ein oder mehreren Kalibriermessungen vor dem eigentlichen Messbetrieb ermittelt, eine entsprechende Kalibrierkurve in der Folgeelektronik abgelegt.

Da demzufolge lediglich nur innerhalb der jeweiligen Heizzyklen eine Heizung des Temperatursensors erforderlich ist, resultiert eine signifikante Reduzierung der Strom- bzw. Leistungsaufnahme, die wiederum insbesondere im Batteriebetrieb deutlich längere Betriebszeiten ermöglicht.

Desweiteren ist als Vorteil der erfindungsgemäßen Lösung anzuführen, dass sich ein einfaches Gesamtsystem ergibt, da im Vergleich zur eingangs erwähnten Konstanttemperatur-Variante eines Luftgeschwindigkeits-Sensors kein Regler mehr erforderlich ist.

Ferner resultiert eine einfache Schnittstelle zwischen dem erfindungsgemäßen Luftgeschwindigkeits-Sensor und ggf. nachgeordneten Mikrokontrollern, da nur noch die Signale eines einzigen Sensorelementes weiterzuverarbeiten sind.

Die vorliegende Erfindung lässt sich selbstverständlich auch zur Messung der Strömungsgeschwindigkeit anderer gasförmiger Medien einsetzen.
Darüberhinaus gibt es diverse Möglichkeiten, wie bzw. wo die Folgeelektronik des erfindungsgemäßen Luftgeschwindigkeits-Sensors angeordnet werden kann. So ist es etwa ebenso möglich, diese in unmittelbarer Umgebung des Temperatursensors anzuordnen oder über eine geeignete Signalverbindung räumlich weiter entfernt anzuordnen.

Die vorliegende Erfindung lässt sich ferner sowohl zur nachfolgend erläuterten Luftgeschwindigkeits-Messung als auch zur Massenstrom-Messung einsetzen.

Weitere Vorteile sowie Einzelheiten der vorliegenden Erfindung ergeben sich aus der nachfolgenden Beschreibung eines Ausführungsbeispieles anhand der beiliegenden Figuren.

Dabei zeigt
- Figur 1: eine schematische Darstellung eines Ausführungsbeispieles des erfindungsgemäßen Luftgeschwindigkeits-Sensors, angeordnet an einem Rohr, durch welches das Strömungsmedium tritt;
- Figur 2: den Zusammenhang zwischen der Heizzeit tⱼ und der Übertemperatur Tⱼ des Temperatursensors im Fall der Strömungsgeschwindigkeit v_{S} = 0 m/sec;
- Figur 3: den Zusammenhang zwischen der Heizzeit tⱼ und der Übertemperatur Tⱼ des Temperatursensors im Fall der Strömungsgeschwindigkeit v_{S} = 35 m/sec;
- Figur 4: ein Blockschaltbild des Luftgeschwindigkeits-Sensors aus Figur 1 zur Erläuterung des Funktionsprinzips.

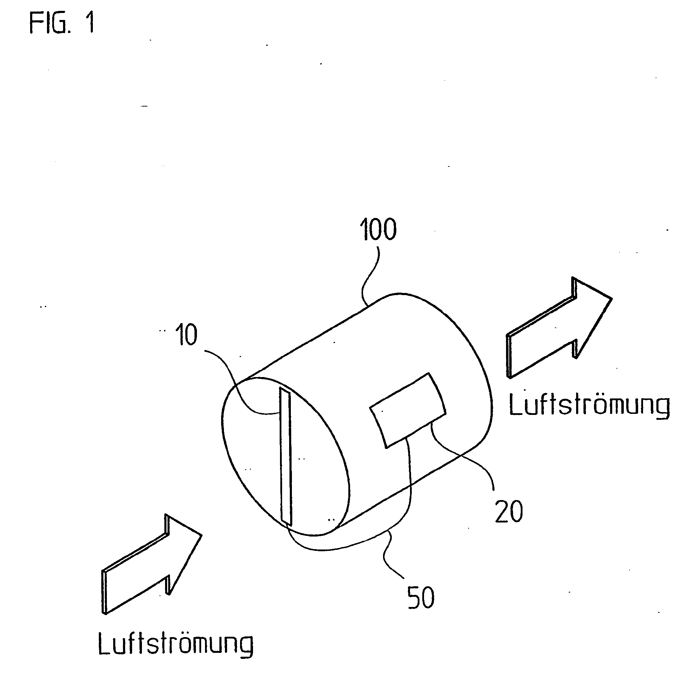

In Figur 1 ist in stark schematisierter Form ein Ausführungsbeispiel des erfindungsgemäßen Luftgeschwindigkeits-Sensors dargestellt, der dazu verwendet wird, die Geschwindigkeit der durch ein Rohr 100 strömenden Luft zu bestimmen. Der hierzu verwendete Luftgeschwindigkeits-Sensor umfasst i.w. ein Sensorelement in Form eines Temperatursensors 10 und eine Folgeelektronik 20, die über eine Verbindungsleitung 50 mit dem Temperatursensor 10 verbunden ist.

Im dargestellten Beispiel ist der Temperatursensor 10 in der Luftströmung, d.h. im Rohr 100, angeordnet; die Folgeelektronik 20 befindet sich hingegen in einem Gehäuse, das an der Außenwand des Rohres 100 befestigt ist.

Alternativ zu einem derartigen Aufbau wäre es auch möglich, den erfndungsgemäßen Luftgeschwindigkeits-Sensor an einem Fühlerrohr anzuordnen, das sich dann seinerseits in der jeweiligen Luftströmung befindet. In diesem Fall würde der Temperatursensor beispielsweise an der Spitze des Fühlerrrohres angeordnet, die Folgeelektronik wäre dann räumlich getrennt hiervon am Gehäuse das Fühlerrohres angeordnet.

Der erfindungsgemäße Luftgeschwindigkeits-Sensor wird nunmehr derart betrieben, dass über die Folgeelektronik 20 der Temperatursensor 10 zyklisch mit einer definierten Heizleistung beaufschlagt wird. Über die Folgeelektronik 20 wird daraufhin die Aufheizzeit Δtⱼ bestimmt, die der Temperatursensor 10 nach der Beaufschlagung mit der Heizleistung benötigt, um sich um eine bestimmte, vorgegebene Temperaturdifferenz ΔTⱼ zu erwärmen. Aus der ermittelten Aufheizzeit Δtⱼ lässt sich daraufhin die jeweilige Strömungsgeschwindigkeit v_{S} bestimmen.

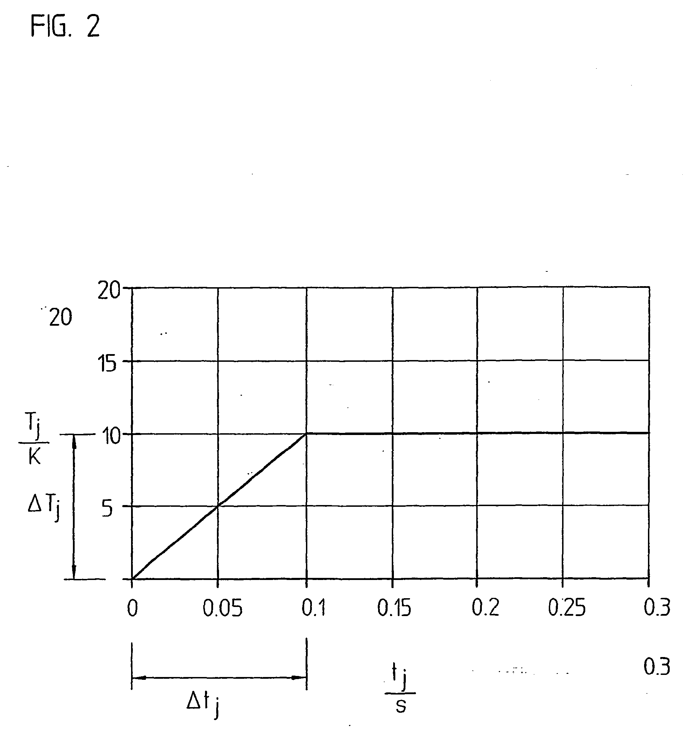

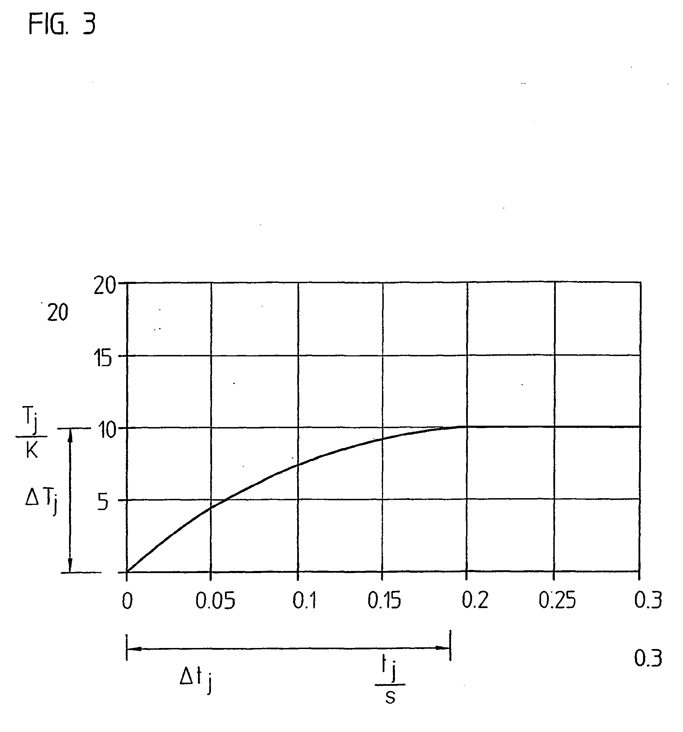

Zur weiteren Erläuterung dieses Vorgehens sei auf die beiden Figuren 2 und 3 verwiesen, die für unterschiedliche Strömungsgeschwindigkeiten v_{S} jeweils den Zusammenhang zwischen der Heizzeit tⱼ ab Messbeginn und der Temperatur bzw. Übertemperatur Tⱼ des Temperatursensors veranschaulichen. In Fig. 2 ist hierbei der Zusammenhang im Fall der Strömungsgeschwindigkeit v_{S} = Om/sec dargestellt, während Fig. 3 den entsprechenden Zusammenhang im Fall der Strömungsgeschwindigkeit v_{S} = 35m/sec veranschaulicht. Wie aus den beiden Darstellungen ersichtlich, benötigt der Temperatursensor im Fall der höheren Strömungsgeschwindigkeit v_{S} = 35 m/sec deutlich länger, um eine vorgegebene Übertemperatur Tⱼ = 10K zu erreichen. So beträgt gemäß Figur 2 bei der Strömungsgeschwindigkeit v_{S} = 0 m/sec für eine Temperaturdifferenz ΔTⱼ = 10K lediglich die Aufheizzeit Δtⱼ ≈ 0.1sec, während gemäß Figur 3 bei einer Strömungsgeschwindigkeit v_{S} = 35 m/sec die entsprechende Aufheizzeit Δtⱼ ≈ 0.19sec beträgt.

Aus der Aufheizzeit Δtⱼ, die der Temperatursensor benötigt, um sich um eine bestimmte vorgegebene Temperaturdifferenz ΔTⱼ zu erwärmen, kann demzufolge die jeweilige Strömungsgeschwindigkeit v_{S} ermittelt werden. Vor der eigentlichen Messung ist daher mindestens eine Kalibrierkurve aufzunehmen, die für eine vorgegebene Erwärmung um eine bestimmte Temperaturdifferenz ΔTⱼ des Temperatursensors den Zusammenhang zwischen der Aufheizzeit Δtⱼ und der zugehörigen Strömungsgeschwindigkeit v_{S} angibt. Im Verlauf der eigentlichen Messung wird zur Bestimmung der Strömungsgeschwindigkeit (v_{S}) aus den gemessenen Aufheizzeiten (Δtⱼ) die Kalibrierkurve verwendet. Die Kalibrierkurve wird in einem geeigneten Speichermedium der Folgeelektronik abgelegt.

Solange der jeweilige Heizpuls am Temperatursensor anliegt, wird solange zu definierten Messzeitpunkten t_{M,i} zyklisch die Temperatur des Temperatursensors bestimmt, bis der Temperatursensor um die vorgegebene Temperaturdifferenz ΔTⱼ erwärmt ist. Wie nachfolgend noch detailliert erläutert wird, erfolgt die Temperaturbestimmung hierbei vorzugsweise aus den gemessenen Widerstandswerten des Temperatursensors, wozu wiederum eine geeignete Spannungsmessung erfolgt. Um eine möglichst präzise Bestimmung der Temperatur des Temperatursensors vorzunehmen, erweist sich ferner als vorteilhaft, die gemessene Spannung über eine Verstärkerschaltung zu verstärken, bevor diese zur Weiterverarbeitung an einen Mikroprozessor in der Folgeelektronik übergeben wird.

Die erwähnte zyklische Temperaturmessung wird hierbei mit einer definierten Messsfrequenz f_{M} zu den jeweiligen Messzeitpunkten t_{M,i} vorgenommen. Als besonders vorteilhaft erweist sich hierbei, wenn die Messfrequenz f_{M} in Abhängigkeit der Strömungsgeschwindigkeit v_{S} gewählt wird bzw. während des Messbetriebes laufend an diese angepasst wird, sofern dies etwa aufgrund sich stark ändernder Strömungsgeschwindigkeiten nötig ist. Dies ist insofern sinnvoll, da es insbesondere bei kleinen Strömungsgeschwindigkeiten v_{S} (< 0.5 m/sec) relativ lange dauert, bis sich der aufgeheizte Temperatursensor wieder auf die Umgebungstemperatur abgekühlt hat. Zweckmäßigerweise wird daher bei kleinen Strömungsgeschwindigkeiten v_{S} eine geringere Messfrequenz f_{M} für die zyklische Temperaturmessung verwendet, bei höheren Strömungsgeschwindigkeiten v_{S} hingegen eine höhere Messfrequenz f_{M}; die Messfrequenz f_{M} wird demzufolge proportional zur Strömungsgeschwindigkeit v_{S} gewählt. Beispielsweise kann etwa bei Strömungsgeschwindigkeiten v_{S} < 0.5 m/sec eine Messfrequenz f_{M} = 0.2 sec⁻¹ vorgesehen sein, bei Strömungsgeschwindigkeiten v_{S} = 30 m/sec hingegen eine Messfrequenz f = 1.0 sec⁻¹; im vorliegenden Beispiel beschreibt demzufolge eine lineare Funktion den Zusammenhang zwischen Strömungsgeschwindigkeit v_{S} und Messfrequenz f_{M}.

Im laufenden Messbetrieb kann etwa eine derartige Anpassung der Messfrequenz f_{M} an die jeweilige aktuelle Strömungsgeschwindigkeit v_{S} erfolgen, indem auf Basis einer gerade ermittelten Strömungsgeschwindigkeit v_{S} die Messfrequenz f_{M} für die Folgemessungen ggf. modifiziert wird, wenn die ermittelte Strömungsgeschwindigkeit v_{S} dies erfordert.

Weiterhin erweist sich als vorteilhaft, wenn nach dem Beginn der Beaufschlagung des Temperatursensors mit der Heizleistung erst nach einer definierten Verzögerungszeit t_{DEL} mit der regelmäßigen Temperaturmessung begonnen wird. Hierbei wird die Verzögerungszeit t_{DEL} so groß gewählt, dass nach Ablauf der Verzögerungszeit t_{DEL} eine eingeschwungene Folgeelektronik zur Verfügung steht. Andernfalls besteht eine größere Messunsicherheit. In einer vorteilhaften Ausführungsform wird die entsprechende Verzögerungszeit t_{DEL} = 200 µsec gewählt.

Da zu den einzelnen Messzeitpunkten t_{M,i} jeweils der exakte Widerstand und damit die Temperatur des Temperatursensor bekannt ist, lässt sich durch geeignete Interpolation zwischen benachbarten Messzeitpunkten t_{M,i}; t_{M,i+1} auch definiert die Aufheizzeit Δtⱼ bestimmen, wenn etwa zwischen benachbarten Messzeitpunkten t_{M,i}; t_{M,i+1} die vorgegebene Temperaturdifferenz ΔTⱼ erreicht wurde.

Sobald der Temperatursensor im Messbetrieb nach Beaufschlagung mit der jeweiligen Heizleistung um vorgegebene Temperaturdifferenz ΔTⱼ erwärmt wurde, wird die Heizung des Temperatursensor beendet. Nach einer gewissen Zykluszeit, z.B. nach einer Sekunde, erfolgt dann die erneute Beaufschlagung des Temperatursensors mit der jeweiligen Heizleistung usw.. Im Messbetrieb ist demzufolge der Temperatursensor die meiste Zeit unbeheizt, d.h. es resultiert eine deutliche verringerte Stromaufnahme im Vergleich zu konventionellen Luftgeschwindigkeits-Sensoren, die nach dem Konstanttemperatur-Verfahren arbeiten.

Nachdem auf die erläuterte Art und Weise die Strömungsgeschwindigkeit v_{S} ermittelt wurde, kann diese z.B. auf einer Anzeigeeinheit visualisiert werden oder aber in ein übertragbares Signal umgewandelt und an eine nachgeordnete Auswerteeinheit zur Weiterverarbeitung übertragen werden.

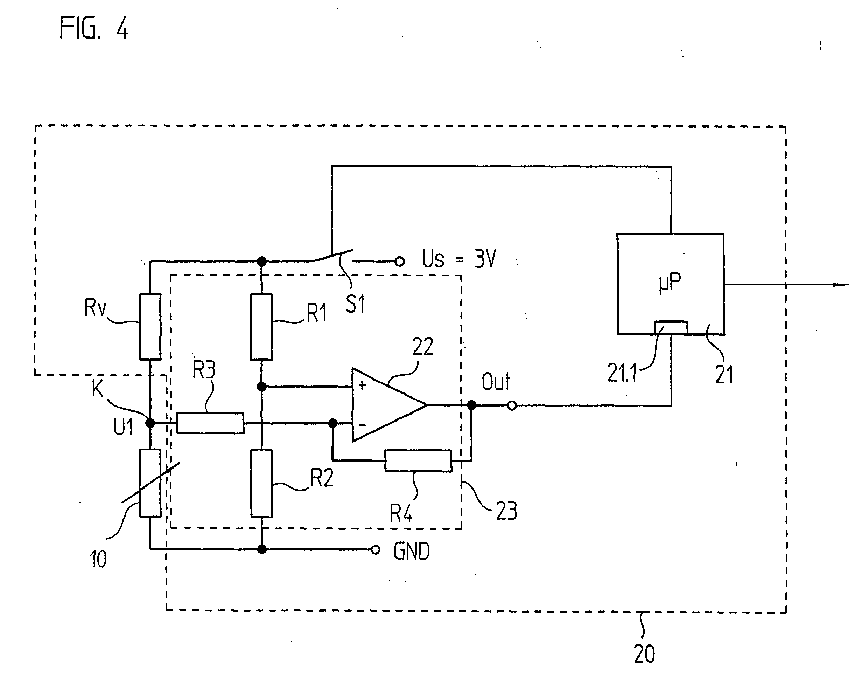

Anhand des Blockschaltbildes in Figur 4 sei abschließend nunmehr der detaillierte Aufbau eines Ausführungsbeispieles des erfindungsgemäßen Luftgeschwindigkeits-Sensors, bestehend aus dem Temperatursensor 10 und der Folgeelektronik 20 erläutert.

Die in Figur dargestellte Variante des Luftgeschwindigkeits-Sensors stellt bereits eine Ausführungsform dar, die gegenüber einer Minimal-Variante auf Seiten der Folgeelektronik 20 um eine Verstärkerstufe 23 mit mehreren Bauelementen R1 - R4, 22 ergänzt ist.

Grundsätzlich erforderlich für den erfindungsgemäßen Luftgeschwindigkeits-Sensor ist neben dem Temperatursensor 10 zumindest ein seriell hierzu geschalteter Vorwiderstand Rv, eine Spannungsversorgung Us sowie ein Schaltelement S1, das zum zeitmäßig definierten Anlegen der Spannungsversorgung Us an den Temperatursensor 10 dient.

Um die am Temperatursensor 10 vorliegende Temperatur zu bestimmen, erfolgt am Knoten K zwischen dem Temperatursensor 10 und dem Vorwiderstand Rv eine Spannungsmessung, die die Messspannung U1 liefert und aus der aufgrund der bekannten Widerstands-Temperatur-Charakteristik in üblicher Weise die Temperatur des Temperatursensors 10 bestimmt werden kann.

Wie bereits oben erwähnt, ist im dargestellten Ausführungsbeispiel zusätzlich eine Verstärkerstufe 23 auf Seiten der Folgeelektronik 20 vorgesehen, über die die Messspannung U1 um einen gewünschten Verstärkungsfaktor V, z.B. V = 20, verstärkt wird, bevor diese über den Ausgang Out an den Mikroprozessor 21 zur Weiterverarbeitung übergeben wird. Diese Maßnahme gewährleistet, dass keine hochauflösenden A/D-Wandler vor dem Mikroprozessor 21 zur hochpräzisen Spannungsmessung erforderlich sind. Es können vielmehr bereits im Mikroprozessor 21 eingangsseitig integrierte A/D-Wandler 21.1 eingesetzt werden, die Auflösungen zwischen 8 und 12 Bit bieten.

Der Temperatursensor 10 als auch der Vorwiderstand Rv sind in bekannter Art und Weise ausgebildet. Der Temperatursensor 10 umfasst hierbei etwa ein dünnes Trägerplättchen aus Glas, auf dem Leiterbahnen aus Material mit temperaturabhängigem Widerstand, z.B. Molybdän, Nickel oder Platin, aufgebracht sind. An dieser Stelle sei darauf hingewiesen, dass es sich beim verwendeten Temperatursensor 10 keineswegs um einen Standard-Temperatursensor handeln muss, wie z.B. ein Pt1000-Element; es ist vielmehr hinreichend, wenn der eingesetzte Temperatursensor 10 im wesentlichen eine definierte Widerstands-Temperatur-Charakteristik besitzt.
Der auf Seiten der Folgeelektronik angeordnete Vorwiderstand Rv ist als Standard-Widerstand mit guter elektrischer Stabilität in Form eines Metallfilmwiderstandes der Bauform MiniMELF oder 0805 ausgebildet.

Als Schaltelement S1 dient ein Halbleiter-Schaltelement, z.B. ein FET, als Spannungsversorgung Us sind ein oder mehrere Batterien vorgesehen.

Desweiteren umfasst die Folgeelektronik 20 einen Mikroprozessor 21, der eine Reihe von Funktionen übernimmt. Hierzu gehört das Betätigen des Schaltelementes S1, die zyklische Bestimmung des Widerstandes des Temperatursensors 10, die Bestimmung der Temperatur des Temperatursensors 10 aus den Widerstandswerten sowie die Bestimmung der benötigten Aufheizzeit, bis die vorgegebene Temperaturdifferenz erreicht ist. Darüberhinaus erfolgt über den Mikroprozessor 21 im vorliegenden Ausführungsbeispiel die Bestimmung der Strömungsgeschwindigkeit v_{S} aus der vorher ermittelten Aufheizzeit Δtⱼ.

Zu Beginn einer Messung wird der Temperatursensor 10 sowie der Vorwiderstand Rv über das vom Mikroprozessor 21 betätigte Schaltelement S1 mit der Spannungsversorgung Us verbunden. Sobald das Schaltelement S1 das erste Mal geschlossen ist, wird ein erstes Mal die Messpannung U1 erfasst. Aus der Messspannung U1 und dem Messstrom lässt sich in bekannter Art und Weise der elektrische Widerstand des Temperatursensors 10 ermitteln. Da sich der Widerstand des Temperatursensors 10 proportional mit der Temperatur des Temperatursensors 10 ändert, kann die vorgegebene Temperaturdifferenz ΔT direkt als Widerstandsänderung ΔR ausgedrückt werden. Diese Widerstandsänderung ΔR ist nur in geringem Maße systematisch von der jeweiligen Umgebungstemperatur abhängig. Der Einfluss der Umgebungstemperatur kann bei geringeren Genauigkeitsanforderungen vernachlässigt werden, im Falle höherer Genauigkeitsanforderungen ist eine rechnerische Kompensation einfach möglich.

Grundsätzlich ist der erfindungsgemäße Luftgeschwindigkeits-Sensor als Massenstrom-Sensor zu betrachten. Dies bedeutet, dass eine einmal erstellte Kalibrierkurve den Zusammenhang zwischen der Aufheizzeit Δtⱼ und der zu ermittelnden Luftgeschwindigkeit v_{S} lediglich für eine bestimmte Temperatur angibt. Im Fall höherer Temperaturen nimmt die Dichte der Luft und damit der gemessene Massenstrom umgekehrt proportional zur absoluten Temperatur ab. Dieser bekannte Zusammenhang kann zur rechnerischen Kompensation ausgenutzt werden, da sich die Temperatur der Luft aus dem Widerstand des Temperatursensors 10 ermitteln lässt. Wird demzufolge eine derartige Kompensation im Falle sich verändender Temperaturen automatisch durchgeführt, so arbeitet die erfindungsgemäße Vorrichtung als Luftgeschwindigkeits-Sensor im beschriebenen Sinne. Darüberhinaus ist es jedoch auch grundsätzlich möglich, auf eine derartige Kompensation zu verzichten, so dass die erfindungsgemäße Vorrichtung im eigentlichen Sinne als Massenstromsensor arbeitet und angibt, wieviel Luft pro Zeiteinheit durch einen definierten Querschnitt fließt.

In festen Zeitabschnitten bzw. mit der vorher diskutierten Messfrequenz f_{M}, z.B. alle 5msec, wird - gesteuert vom Mikroprozessor 21 - zu definierten Messzeitpunkten t_{M} die Bestimmung der Messspannung U1 wiederholt und der jeweilige Widerstand des Temperatursensors 10 ermittelt. Über den Mikroprozessor 21 wird derart die Aufheizung des Temperatursensors 10 solange überwacht, bis die Widerstandsänderung ΔR des Temperatursensors 10 eine bestimmte Schwelle übersteigt, d.h. der Temperatursensor 10 um die vorgegebene Temperaturdifferenz ΔTⱼ aufgeheizt wurde. Sobald dies der Fall ist, wird der Temperatursensor 10 durch das Öffnen des Schaltelementes S1 wieder von der Spannungsversorgung Us getrennt.

Die benötigte und gemessene Aufheizzeit Δtⱼ zwischen dem Start der Messung und dem Erreichen der vorgegebenen Widerstandsänderung ΔR ist in definierter Form von der Strömungsgeschwindigkeit v_{S} und der jeweiligen Heizleistung am Temperatursensor 10 abhängig. Die Heizleistung wiederum ist bei konstantem Vorwiderstand Rv nur minimal von der Aufheizung des Temperatursensors 10 abhängig; diese Abhängigkeit kann in der Praxis vernachlässigt werden. Es existiert eine deutlichere Abhängigkeit von der gelieferten Versorgungsspannung. Sollte deshalb keine hinreichende Konstanz der Versorgungsspannung gewährleistet werden können, so ist es möglich, deren Einfluss rechnerisch zu kompensieren.

Desweiteren erweist es sich als vorteilhaft, durch die geeignete Dimensionierung des Vorwiderstandes Rv sicherzustellen, dass auch im Fall einer minimalen Heizleistung und einer maximal erwartbaren Umgebungstemperatur, die vorgegebene Temperaturdifferenz bei der Aufheizung erreicht werden kann.

Die ermittelte Aufheizzeit Δtⱼ kann demzufolge als unmittelbares Maß für die Strömungsgeschwindigkeit v_{S} verwendet werden. Vorzugsweise erfolgt die Bestimmung der Strömungsgeschwindigkeit v_{S} aus der Aufheizzeit Δtⱼ mit Hilfe einer oder mehrerer Kalibrierkurven sowie die erwähnten ggf. erforderlichen Korrekturen und Kompensationen im Mikroprozessor 21.

Es resultiert somit ein einfaches System zur Ermittlung von Strömungsgeschwindigkeiten, das zudem den geforderten stromsparenden Betrieb ermöglicht.

## Patentansprüche

1. Luftgeschwindigkeits-Sensor, bestehend aus einem in einer Luftströmung angeordneten Temperatursensor (10) und einer Folgeelektronik (20), wobei die Folgeelektronik (20) zur zyklischen Beaufschlagung des Temperatursensors (10) mit einer definierten Heizleistung sowie zur Bestimmung einer Aufheizzeit (Δt_{J}) ausgebildet ist, die der Temperatursensor (10) nach der Beaufschlagung mit der Heizleistung benötigt, um sich um eine bestimmte Temperaturdifferenz (ΔT_{J}) zu erwärmen,
**dadurch gekennzeichnet,**
**dass** die Folgeelektronik (20) derart ausgebildet ist, dass zur Bestimmung der Aufheizzeit (Δtⱼ) eine regelmäßige Temperaturmessung mit einer definierten Messfrequenz (f_{M}) erfolgt und aus der Aufheizzeit (Δtⱼ), die Strömungsgeschwindigkeit (v_{S}) bestimmbar ist, wobei die Messfrequenz (f_{M}) in Abhängigkeit der Strömungsgeschwindigkeit (v_{S}) gewählt ist, indem im laufenden Messbetrieb eine Anpassung der Messfrequenz (f_{M}) an die jeweilige aktuelle Strömungsgeschwindigkeit (v_{S}) erfolgt.

2. Luftgeschwindigkeits-Sensor nach Anspruch 1, **dadurch gekennzeichnet, dass** die Folgeelektronik (20) eine Spannungsversorgung (Us) für den Temperatursensor (10), einen seriell zum Temperatursensor (10) geschalteten Vorwiderstand (Rᵥ) sowie ein Schaltelement (S1) zum Verbinden und Trennen der Spanungsversorgung (Us) mit dem Temperatursensor (10) umfasst

3. Luftgeschwindigkeits-Sensor nach Anspruch 2, **dadurch gekennzeichnet, dass** der Vorwiderstand (Rv) derart dimensioniert ist, dass auch im Fall einer minimalen Heizleistung und einer maximal erwartbaren Umgebungstemperatur, die vorgegebene Temperaturdifferenz (ΔTⱼ) bei der Aufheizung erreichbar ist.

4. Luftgeschwindigkeits-Sensor nach Anspruch 2, **dadurch gekennzeichnet, dass** die Folgeelektronik (20) einen Mikroprozessor (21) umfasst, über den
- das Betätigen des Schaltelementes (S1) erfolgt,
- eine zyklische Bestimmung des elektrischen Widerstandes des Temperatursensors (10) mit der Messfrequenz (f_{M}) erfolgt,
- die Bestimmung der aktuellen Temperatur des Temperatursensors (10) aus den Widerstandswerten erfolgt,
- die Bestimmung der benötigten Aufheizzeit (Δtⱼ) erfolgt, bis die vorgegebene Temperaturdifferenz (ΔTⱼ) erreicht ist sowie
- die Bestimmung der Strömungsgeschwindigkeit (v_{S}) aus der benötigten Aufheizzeit (Δtⱼ) erfolgt.

5. Luftgeschwindigkeits-Sensor nach Anspruch 2, **dadurch gekennzeichnet, dass** die Folgeelektronik (20) ferner eine Verstärkerstufe (23) aus mehreren Widerständen (R1 - R4) und einem Operationsverstärker (22) umfasst, über die das Signal bzgl. des elektrischen Widerstandes des Temperatursensors (10) verstärkbar ist.

6. Luftgeschwindigkeits-Sensor nach Anspruch 1, **dadurch gekennzeichnet, dass** in der Folgeelektronik (20) mindestens eine Kalibrierkurve abgelegt ist, die den Zusammenhang zwischen der Aufheizzeit (Δtⱼ) und der Strömungsgeschwindigkeit (v_{S}) für den jeweiligen Luftgeschwindigkeits-Sensor beschreibt.

7. Luftgeschwindigkeits-Sensor nach Anspruch 1, **dadurch gekennzeichnet, dass** der Temperatursensor in einem Fühlerrohr angeordnet ist, das sich in der Luftströmung befindet und die Auswerteelektronik räumlich getrennt vom Temperatursensor am Fühlerrohr angeordnet ist.

8. Luftgeschwindigkeits-Sensor nach Anspruch 1, **dadurch gekennzeichnet, dass** der Temperatursensor (10) in einem Rohr (100) montiert ist, durch das die Luftströmung tritt und die Auswerteelektronik (20) räumlich getrennt vom Temperatursensor (10) am Rohr (100) angeordnet ist.

9. Verfahren zum Betrieb eines Luftgeschwindigkeits-Sensors, der einen in einer Luftströmung angeordneten Temperatursensor (10) sowie eine Folgeelektronik (20) umfasst, wobei über die Folgeelektronik (20)
- der Temperatursensor (10) zyklisch mit einer definierten Heizleistung beaufschlagt wird,
- die Aufheizzeit (Δtⱼ) bestimmt wird, die der Temperatursensor (10) nach der Beaufschlagung mit der Heizleistung benötigt, um sich um eine bestimmte, vorgegebene Temperaturdifferenz (ΔTⱼ) zu erwärmen,
**dadurch gekennzeichnet,**
**dass** über die Folgeelektronik (20) zur Bestimmung der Aufheizzeit (Δtⱼ) eine regelmäßige Temperaturmessung mit einer definierten Messfrequenz (f_{M}) vorgenommen wird und aus der Aufheizzeit (Δtⱼ) die Strömungsgeschwindigkeit (v_{S}) bestimmt wird, wobei die Messfrequenz (f_{M}) in Abhängigkeit der Strömungsgeschwindigkeit (v_{S}) gewählt wird, indem im laufenden Messbetrieb eine Anpassung der Messfrequenz (f_{M}) an die jeweilige aktuelle Strömungsgeschwindigkeit (v_{S}) erfolgt.

10. Verfahren nach Anspruch 9, **dadurch gekennzeichnet, dass** nach dem Beginn des Aufheizens des Temperatursensors (10) zu definierten Messzeitpunkten (t_{M,I}) zyklisch mit der Messfrequenz (f_{M}) die Temperatur des Temperatursensors (10) aus elektrischen Widerstandswerten des Temperatursensors (10) bestimmt wird, bis der Temperatursensor (10) um die vorgegebene Temperaturdifferenz (ΔT_{J}) erwärmt ist.

11. Verfahren nach Anspruch 10, **dadurch gekennzeichnet, dass** zur exakten Bestimmung der Aufheizzeit (Δtⱼ) eine Interpolation der Temperaturänderung zwischen zwei Messzeitpunkten (t_{M,i}, t_{M,i+1}) vorgenommen wird.

12. Verfahren nach Anspruch 10, **dadurch gekennzeichnet, dass** nach der Erwärmung um die vorgegebene Temperaturdifferenz (ΔTⱼ) die Heizung des Temperatursensors (10) beendet wird.

13. Verfahren nach Anspruch 9, **dadurch gekennzeichnet, dass** zur Bestimmung der Temperatur des Temperatursensors (10) eine Spannungsmessung erfolgt.

14. Verfahren nach Anspruch 13, **dadurch gekennzeichnet, dass** die gemessenen Spannung (U1) über eine Verstärkerstufe (23) verstärkt wird, bevor die gemessene Spannung (U1) an einen Mikroprozessor (21) der Folgeelektronik (20) zur Weiterverarbeitung übergeben wird.

15. Verfahren nach Anspruch 9, **dadurch gekennzeichnet dass** vor der Messung mindestens eine Kalibrierkurve aufgenommen wird, die den Zusammenhang zwischen der Aufheizzeit (Δtⱼ) und der Strömungsgeschwindigkeit (v_{S}) für den jeweiligen Luftgeschwindigkeits-Sensor beschreibt und im Verlauf der Messung zur Bestimmung der Strömungsgeschwindigkeit (v_{S}) aus den gemessenen Aufheizzeiten (Δtⱼ) verwendet wird.

16. Verfahren nach Anspruch 15, **dadurch gekennzeichnet, dass** die Kalibrierkurve in der Folgeelektronik (20) abgelegt wird.

17. Verfahren nach Anspruch 9, **dadurch gekennzeichnet, dass** die ermittelte Strömungsgeschwindigkeit (v_{S}) auf einer Anzeigeeinheit visualisiert wird.

18. Verfahren nach Anspruch 9, **dadurch gekennzeichnet, dass** die ermittelte Strömungsgeschwindigkeit (v_{S}) in ein übertragbares Signal umgewandelt und an eine nachgeordnete Auswerteeinheit zur Weiterverarbeitung übergeben wird.

19. Verfahren nach Anspruch 9, **dadurch gekennzeichnet, dass** nach dem Beginn der Beaufschlagung des Temperatursensors (10) mit der Heizleistung erst nach einer definierten Verzögerungszeit (t_{DEL}) mit der regelmäßigen Temperaturmessung begonnen wird.

## Claims

1. An air speed sensor consisting of a temperature sensor (10) arranged in an air current and a sequential electronics (20), wherein the sequential electronics (20) is embodied to cyclically impinge the temperature sensor (10) with a defined heat output as well as to determine a heating time (Δtⱼ), which is required by the temperature sensor (10) to heat up to a given temperature difference (ΔT_{J}) after being impinged upon with the heat output,
**characterized in**
**that** the sequential electronics (20) is embodied in such a manner that a constant temperature measurement is carried out by means of a defined measuring frequency (f_{M}) to determine the heating time (Δtⱼ) and that the flow speed (vₛ) can be determined from the heating time (Δtⱼ), wherein the measuring frequency (f_{M}) is chosen as a function of the flow speed (vₛ) in that an adaptation of the measuring frequency (f_{M}) to the respective current flow speed (vₛ) is carried out in the ongoing measuring operation.

2. The air speed sensor according to claim 1, **characterized in that** the sequential electronics (20) comprises a voltage supply (Uₛ) for the temperature sensor (10), a series resistor (Rᵥ), which is serially connected to the temperature sensor (10), as well as a control element (S1) for connecting and separating the voltage supply (Us) to the temperature sensor (10).

3. The air speed sensor according to claim 2, **characterized in that** the series resistor (Rᵥ) is dimensioned in such a manner that the predetermined temperature difference (ΔT_{J}) can be reached in response to the heating in the case of a minimal heat output and a maximally expectable ambient temperature as well.

4. The air speed sensor according to claim 2, **characterized in that** the sequential electronics (20) comprises a microprocessor (21), via which
- the activation of the control element (S1) is carried out,
- a cyclical determination of the electric resistance of the temperature sensor (10) is carried out by means of the measuring frequency (f_{M}),
- the determination of the current temperature of the temperature sensor (10) is made from the resistance values,
- the determination of the required heating time (Δtⱼ) is carried out until the predetermined temperature difference (ΔT_{J}) is reached as well as
- the determination of the flow speed (vₛ) is made from the required heating time (Δtⱼ).

5. The air speed sensor according to claim 2, **characterized in that** the sequential electronics (20) furthermore comprises an amplifier stage (23) consisting of a plurality of resistors (R1-R4) and an operational amplifier (22), via which the signal relating to the electric resistance of the temperature sensor (10) can be amplified.

6. The air speed sensor according to claim 1, **characterized in that** at least one calibrating curve, which describes the context between the heating time (Δtⱼ) and the flow speed (vₛ) for the respective air speed sensor, is stored in the sequential electronics (20).

7. The air speed sensor according to claim 1, **characterized in that** the temperature sensor is arranged in a sensor tube, which is located in the air current and **in that** the evaluation electronics is arranged on the sensor tube so as to be spatially separated from the temperature sensor.

8. The air speed sensor according to claim 1, **characterized in that** the temperature sensor (10) is mounted in a tube (100), through which the air current passes and **in that** the evaluation electronics (20) is arranged on the tube (100) so as to spatially separated from the temperature sensor (10).

9. A method for operating an air speed sensor, which comprises a temperature sensor (10) arranged in an air current as well as a sequential electronics (20), wherein, via the sequential electronics (20),
- the temperature sensor (10) is cyclically impinged with a defined heat output,
- the heating time (Δtⱼ), which is required by the temperature sensor (10) to heat up to a given predetermined temperature difference (ΔT_{J}) after being impinged upon with the heat output, is determined,
**characterized in**
**that** a constant temperature measurement is carried out via the sequential electronics (20) by means of a defined measuring frequency (f_{M}) to determine the heating time (Δtⱼ) and that the flow speed (vₛ) is determined from the heating time (Δtⱼ), wherein the measuring frequency (f_{M}) is chosen as a function of the flow speed (vₛ) in that an adaptation of the measuring frequency (f_{M}) to the respective current flow speed (vₛ) is carried out in the ongoing measuring operation.

10. The method according to claim 9, **characterized in that** the temperature of the temperature sensor (10) is determined cyclically with the measuring frequency (f_{M}) after the onset of the heating of the temperature sensor (10) at defined measuring times (t_{M,I}) from electric resistance values of the temperature sensor (10) until the temperature sensor (10) is heated by the predetermined temperature difference (ΔT_{J}).

11. The method according to claim 10, **characterized in that** an interpolation of the temperature change between two measuring times (t_{M,I}, t_{MI+1}) is carried out to accurately determine the heating time (Δtⱼ).

12. The method according to claim 10, **characterized in that** the heating of the temperature sensor (10) is terminated after the heating up to the predetermined temperature difference (ΔT_{J}).

13. The method according to claim 9, **characterized in that** a voltage measurement is carried out to determine the temperature of the temperature sensor (10).

14. The method according to claim 13, **characterized in that** the measured voltage (U1) is amplified via an amplification stage (23) before the measured voltage (U1) is transferred to a microprocessor (21) of the sequential electronics (20) for further processing.

15. The method according to claim 9, **characterized in that** at least one calibration curve, which describes the context between the heating time (Δtⱼ) and the flow speed (vₛ) for the respective air speed sensor, is stored prior to the measurement and is used to determine the flow speed (vₛ) from the measured heating times (Δtⱼ) during the course of the measurement.

16. The method according to claim 15, **characterized in that** the calibrating curve is stored in the sequential electronics (20).

17. The method according to claim 9, **characterized in that** the determined flow speed (vₛ) is visualized on a display unit.

18. The method according to claim 9, **characterized in that** the determined flow speed (vₛ) is converted into a transferrable signal and is transferred to an evaluation unit, which is connected downstream, for further processing.

19. The method according to claim 9, **characterized in that** the constant temperature measurement is initiated only after a defined delay time (t_{DEL}) after the onset of the impingement of the temperature sensor (10) with the heat output.

## Revendications

1. Capteur de vitesse d'air, constitué d'un capteur de température (10) disposé dans un courant d'air et d'une électronique de séquence (20), l'électronique de séquence (20) étant conçue pour soumettre de façon cyclique le capteur de température (10) à une puissance calorifique définie, ainsi que pour déterminer un temps de chauffe (Δtⱼ), que le capteur de température (10) nécessite, après avoir été soumis à la puissance calorifique, pour se réchauffer d'une certaine différence de température (ΔTⱼ),
**caractérisé en ce que**
l'électronique de séquence (20) est conçue de telle manière, que le temps de chauffe (Δtⱼ) est déterminé au moyen d'un mesurage de température régulier, avec une fréquence de mesurage (f_{M}) définie, et que la vitesse de flux d'air (vₛ) peut être déterminée à partir du temps de chauffe (Δtⱼ), la fréquence de mesurage (f_{M}) étant choisie en fonction de la vitesse de flux d'air (vₛ), en adaptant la fréquence de mesurage (f_{M}) à la vitesse de flux d'air (vₛ) actuelle pendant l'opération de mesurage.

2. Capteur de vitesse d'air selon la revendication 1, **caractérisé en ce que** l'électronique de séquence (20) comprend une alimentation électrique (Uₛ) pour le capteur de température (10), une résistance (Rᵥ) montée en série avec le capteur de température (10), ainsi qu'un élément de commande (Uₛ) pour connecter et déconnecter le capteur de température (10) par rapport à l'alimentation électrique (Uₛ).

3. Capteur de vitesse d'air selon la revendication 2, **caractérisé en ce que** la résistance série (Rᵥ) est dimensionnée de façon à ce que la différence de température prédéfinie (ΔTⱼ) puisse être atteinte lors du chauffage, même dans le cas d'une puissance calorifique minimale et d'une température ambiante possible maximale.

4. Capteur de vitesse d'air selon la revendication 2, **caractérisé en ce que** l'électronique de séquence (20) comprend un microprocesseur (21), permettant d'exécuter les actions suivantes :
- actionnement de l'élément de commande (S1),
- détermination cyclique de la résistance électrique du capteur de température (10) avec la fréquence de mesurage (f_{M}),
- détermination de la température actuelle du capteur de température (10) à partir des valeurs de résistance,
- détermination du temps de chauffe (Δtⱼ) nécessaire, jusqu'à ce que la différence de température (ΔTⱼ) prédéfinie soit atteinte,
- détermination de la vitesse de flux d'air (vₛ) à partir du temps de chauffe (Δtⱼ) nécessaire.

5. Capteur de vitesse d'air selon la revendication 2, **caractérisé en ce que** l'électronique de séquence (20) comprend en outre un étage amplificateur (23) formé de plusieurs résistances (R1 - R4), ainsi qu'un amplificateur d'opération (22), au moyen duquel le signal relatif à la résistance électrique du capteur de température (10) peut être amplifié.

6. Capteur de vitesse de température selon la revendication 1, **caractérisé en ce qu'**au moins une courbe d'étalonnage est déposée dans l'électronique de séquence (20), pour décrire le rapport entre le temps de chauffe (Δtⱼ) et la vitesse de flux d'air (vₛ) pour chacun des capteurs de vitesse d'air.

7. Capteur de vitesse de température selon la revendication 1, **caractérisé en ce que** le capteur de température est disposé dans un tube de sonde situé dans le flux d'air, et **en ce que** l'électronique d'évaluation est disposée sur le tube de sonde, à l'écart du capteur de température.

8. Capteur de vitesse de température selon la revendication 1, **caractérisé en ce que** le capteur de température (10) est installé dans un tube (100) traversé par le flux d'air, et **en ce que** l'électronique d'évaluation (20) est disposée sur le tube (100) à l'écart du capteur de température (10).

9. Procédé pour le fonctionnement d'un capteur de vitesse de température comprenant un capteur de température (10) disposé dans un flux d'air, ainsi qu'une électronique de séquence (20), l'électronique de séquence (20) permettant d'exécuter les actions suivantes :
- application cyclique d'une puissance calorifique définie au capteur de température (10),
- détermination du temps de chauffe (Δtⱼ) nécessité par le capteur de température (10) après l'application de la puissance calorifique pour se réchauffer d'une certaine différence de température (ΔTⱼ) prédéfinie.
**caractérisé en ce que**
l'électronique de séquence (20) effectue un mesurage de température régulier, avec une fréquence de mesurage (f_{M}) définie, pour la détermination du temps de chauffe (Δtⱼ), et **en ce que** la vitesse de flux d'air (vₛ) est déterminée à partir du temps de chauffe (Δtⱼ), la fréquence de mesurage (f_{M}) étant choisie en fonction de la vitesse de flux d'air (vₛ), en adaptant la fréquence de mesurage (f_{M}) à la vitesse de flux d'air (vₛ) actuelle pendant l'opération de mesurage.

10. Procédé selon la revendication 9, **caractérisé en ce que** la température du capteur de température (10) est déterminée à partir des valeurs de résistance électriques du capteur de température (10), de façon cyclique avec la fréquence de mesurage (f_{M}), suite au commencement du chauffage du capteur de température (10) à des moments de mesurage (_{tM,1}) définis, jusqu'à ce que le capteur de température (10) se soit réchauffé de la différence de température (ΔTⱼ) prédéfinie.

11. Procédé selon la revendication 10, **caractérisé en ce qu'**une interpolation de la modification de température entre deux moments de mesurage (t_{M,1} ; t_{M+1}) est effectuée pour la détermination exacte du temps de chauffe (Δtⱼ).

12. Procédé selon la revendication 10, **caractérisé en ce que** le chauffage du capteur de température (10) est terminé après le réchauffement d'une différence de température (ΔTⱼ) prédéfinie.

13. Procédé selon la revendication 9, **caractérisé en ce qu'**un mesurage de la tension est effectué pour déterminer la température du capteur de température (10).

14. Procédé selon la revendication 13, **caractérisé en ce que** la tension mesurée (U1) est amplifiée au moyen d'un étage amplificateur (23), avant que la tension mesurée (U1) soit transmise à un microprocesseur (21) de l'électronique de séquence (20) pour traitement.

15. Procédé selon la revendication 9, **caractérisé en ce qu'**au moins une courbe d'étalonnage est reçue avant le mesurage, pour décrire le rapport entre le temps de chauffe (Δtⱼ) et la vitesse de flux d'air (vₛ) pour chacun des capteurs de vitesse d'air, et qui est utilisée au cours du mesurage pour déterminer la vitesse de flux d'air (vₛ) à partir des temps de chauffe mesurés (Δtⱼ).

16. Procédé selon la revendication 15, **caractérisé en ce que** la courbe d'étalonnage est déposée dans l'électronique de séquence (20).

17. Procédé selon la revendication 9, **caractérisé en ce que** la vitesse de flux d'air (vₛ) calculée est visualisée sur une unité d'affichage.

18. Procédé selon la revendication 9, **caractérisé en ce que** la vitesse de flux d'air (vₛ) calculée est transformée en un signal transmissible et transmise pour traitement à une unité d'évaluation située en aval.

19. Procédé selon la revendication 9, **caractérisé en ce qu'**après le commencement de l'application d'une puissance calorifique au capteur de température (10), le mesurage de température régulier ne commence qu'après un temps de réponse (t_{DEL}) défini.
